# EUROPÄISCHE PATENTSCHRIFT

(11) **EP 3 432 203 B1**
(45) Veröffentlichungstag und Bekanntmachung des Hinweises auf die Patenterteilung: **27.05.2020**
(21) Anmeldenummer: 18178640.1
(22) Anmeldetag: 19.06.2018
(51) Int. Cl.: G01C 21/32, G01C 21/36, G06K 9/00, B60W 50/00, B60W 40/072, B60W 30/10, B60W 30/165

(54) **PRÄDIKTIVE STRECKENFÜHRUNG EINES FAHRZEUGS**
PREDICTIVE ROADWAY GUIDANCE OF A VEHICLE
ITINÉRAIRE PRÉDICTIF D'UN VÉHICULE

(30) Priorität: 18.07.2017 DE 102017212254
(43) Veröffentlichungstag der Anmeldung: 23.01.2019
(73) Patentinhaber: VOLKSWAGEN AKTIENGESELLSCHAFT, 38440 Wolfsburg (DE)
(72) Erfinder: Eigel, Thomas, 13585 Berlin (DE)

(56) Entgegenhaltungen:
- WO-A1-2009/074206
- DE-A1-102008 021 381

## Beschreibung

Die Erfindung betrifft ein Verfahren zur Streckenführung eines Fahrzeugs mit Hilfe prädiktiver Streckendaten, eine entsprechende Vorrichtung für ein Fahrzeug sowie eine Verwendung des Verfahrens in einem Fahrzeug.

Digitale Karten werden derzeit in einem Fahrzeug hauptsachlich für Navigationszwecke im fahrzeugeigenen Navigationssystem genutzt, wobei digitale Kartendaten jedoch auch bei der Fahrzeugführung durch Assistenzsysteme zunehmend zum Einsatz kommen. So kann beispielsweise ein vorausschauendes ACC-System derartige Kartendaten nutzen, um die Geschwindigkeit vor Kurven anzupassen oder eine Querführungsassistenz wird mit Hilfe von Kartendaten verbessert. Stimmen die digitalen Kartendaten nicht mit der Realität überein, so kann es zu Funktionseinschränkungen bzw. Fehleingriffen der Assistenzsysteme kommen.

Innerhalb des Fahrzeugs werden die digitalen Kartendaten des Navigationssystems an die verschiedenen Steuergerate der Assistenzsysteme verteilt. Um die Datenmenge bei der Verteilung der Informationen zu reduzieren, wird das zugrundeliegende Kartenmaterial abgetastet und durch Klothoidensegmente approximiert. Wegen der beschränkten Bandbreite bei der Übertragung muss eine Abwägung zwischen Genauigkeit und Vorausschauweite in dem Sinn erfolgen, dass eine hohe Genauigkeit eine kurze Vorausschau und eine geringe Genauigkeit eine weite Vorausschau ermöglicht. Dabei kann es dazu kommen, dass Krümmungen eines Straßenverlaufs durch die Approximation unterschätzt werden.

Die Druckschrift WO 2004/0097453 A1 betrifft eine Fahrerassistenzvorrichtung für Kraftfahrzeuge, mit einem Kursprädiktionsmodul und einer Schnittstelle zu einem Navigationssystem, das dem Kursprädiktionsmodul Informationen über den Fahrbahnverlauf bereitstellt. In dem Navigationssystem ist Information über den Fahrbahnverlauf auf einem Datenträger, wie beispielsweise einer CD-ROM oder DVD, gespeichert und die Information über die aktuelle Position des eigenen Fahrzeugs wird durch ein satellitengestütztes Positionierungssystem zur Verfügung gestellt. Durch Ausnutzung dieser Informationen kann der Fahrkurs vorhergesagt werden und insbesondere kann ein gekrümmter Fahrbahnverlauf vorausschauend vor der tatsächlichen Einfahrt in die Kurve prädiziert werden. Wenn allerdings eine fahrdynamische Größe, wie beispielsweise die Gierrate, einen Offset aufweist, so besteht zwischen der direkt gemessenen Gierrate und der mit·Hilfe des Navigationssystems anhand der Fahrbahnkrümmung berechneten Gierrate eine konstante oder allmählich driftende Differenz. Länger anhaltende, in der Größe fluktuierende Diskrepanzen deuten dann darauf hin, dass die vom Navigationssystem bereitgestellte Information über den Fahrbahnverlauf fehlerbehaftet ist.

Die Druckschrift DE 10 2009 047 476 A1 betrifft ein Verfahren zur Bestimmung einer Schnitttrajektorie, die ein Schneiden eines Kurvenabschnitts einer Fahrspur durch ein Fahrzeug ermöglicht. Dabei wird eine Information über den Kurvenabschnitt empfangen und der Kurvenabschnitt wird in mindestens ein Kurvensegment mit einer Segmentlänge und einer Startkrümmung unterteilt, wobei das Kurvensegment entweder ein Geradensegment oder ein Kreisbogensegment oder ein Kurvensegment ist, dessen Krümmung eine Funktion einer Bogenlänge des Kurvensegments ist. Es folgt ein Bestimmen einer Schnitttrajektorie aus dem mindestens einen Kurvensegment, sodass die Schnitttrajektorie in einem bestimmten Punkt des Kurvenabschnitts eine vorbestimmte Ablage in Bezug auf eine Mitte der Fahrspur aufweist.

Die gattungsbildende Druckschrift DE 10 2008 021 381 A1 betrifft ein Verfahren und eine Vorrichtung zum Vorhersagen eines Krümmungsverlaufs einer Fahrbahn, bei dem die Position eines Fahrzeugs bestimmt wird und abhängig von der Position des Fahrzeugs auf der Fahrbahn der vor dem Fahrzeug befindliche und im Verlauf vorherzusagende Fahrbahnabschnitt selektiert wird, wobei Bauvorschriften für Kurvenverläufe von Fahrbahnen für die Vorhersage des Krümmungsverlaufs für den vor dem Fahrzeug befindlichen Fahrbahnabschnitt berücksichtigt werden.

Die Druckschrift WO 2009/074206 A1 betrifft ein Verfahren zum Betrieb eines Navigationssystems, insbesondere eines Navigationssystems für ein Fahrzeug, bei dem aktuelle Karteninformationen und aktuelle Fahrzeuginformationen erfasst und analysiert, anhand derer eine momentane Streckenposition und/oder ein vorausliegender Streckenverlauf bestimmt werden, wobei anhand eines Vergleichs der aktuellen Fahrzeuginformationen mit den aktuellen Karteninformationen die Qualität der aktuellen Karteninformationen ermittelt wird. Erfindungsgemäß wird anhand eines Vergleichs von aktuellen Karteninformationen und damit korrespondierenden aktuellen Fahrzeuginformationen zumindest ein Grad der Qualität der aktuellen Karteninformationen bestimmt, wobei zur Ermittlung der momentanen Streckenposition und/oder des vorausliegenden Streckenverlaufs die aktuellen Karteninformationen entsprechend dem ermittelten Grad der Qualität berücksichtigt werden.

Der Erfindung liegt daher die Aufgabe zugrunde, die auf digitalen Kartendaten basierenden Unterschätzung des Krümmungsverlauf einer Fahrbahnkurve zu verbessern und zu korrigieren.

Diese Aufgabe wird durch ein Verfahren mit den Merkmalen des Anspruchs 1, durch eine Vorrichtung mit den Merkmalen des Anspruchs 7 sowie die Verwendung des Verfahrens in einem Assistenzsystem mit den Merkmalen des Anspruchs 10 gelöst. Bevorzugte Ausgestaltungen der Erfindung sind Gegenstand der Unteransprüche.

Das erfindungsgemäße Verfahren zur Prädiktion des zukünftigen Fahrbahnverlaufs für ein auf einer Fahrbahn fahrendes Fahrzeug, wobei die Fahrbahn einen ersten Abschnitt, eine Kurve und einen zweiten Abschnitt aufweist, und die Kurve zwischen dem ersten und dem zweiten Abschnitt angeordnet ist, umfasst die Schritte:
- Bestimmen eines aus einem digitalen Kartenmaterial abgeleiteten approximierten Fahrbahnverlaufs mittels eines ursprünglichen Klothoidensegments, wobei das ursprüngliche Klothoidensegment einen Anfangspunkt auf dem ersten Abschnitt aufweist, einen Endpunkt auf dem zweiten Abschnitt aufweist, und das ursprüngliche Klothoidensegment den durch Kurve vorgegebenen Winkel zwischen dem ersten und dem zweiten Abschnitt überstreicht,
- Fortlaufendes Korrigieren des ursprünglichen Klothoidensegments durch zeitlich nach dem ursprünglichen Klothoidensegment ermittelte korrigierende Klothoidensegmente, wobei die korrigierenden Klothoidensegmente die Krümmung des bereits nach dem Anfangspunkt tatsächlich zurückgelegten Fahrwegs berücksichtigen, und
- die korrigierenden Klothoidensegmente den Anfangspunkt und den Endpunkt des ursprünglichen Klothoidensegments aufweisen, sowie den durch die Kurve vorgegebenen Winkel zwischen dem ersten Abschnitt und dem zweiten Abschnitt überstreichen.

Das Verfahren führt eine Online-Korrektur der approximierten Kartendaten unter der Annahme durch, dass die Approximation des genauen Kartenmaterials formerhaltend ist. Dabei wird unter formerhaltend verstanden, dass der überstrichene Winkel einer Kurve korrekt ist und der Anfangspunkt und der Endpunkt des approximierenden Klothoidensegments mit der Karte übereinstimmen. Daraus ergibt sich die Möglichkeit, die vorausliegende Krümmung während der Fahrt auf dem Klothoidensegment zu korrigieren.

Unter dem ersten Abschnitt wird im vorliegenden Fall ein Fahrbahnabschnitt vor der betrachteten Kurve und unter dem zweiten Abschnitt ein Fahrbahnabschnitt nach dieser Kurve verstanden. Dabei können die Abschnitte unterschiedliche Formen haben. Beispielsweise kann es sich bei einer einfachen Kurve bei den Abschnitten um vor oder nach der Kurve angeordnete Geradenstücke handeln. Eine andere Möglichkeit, wie beispielsweise bei einer S-Kurve, wäre ein Geradenstück als ersten Abschnitt und der Anfang der zweiten Kurve als zweiten Abschnitt, so dass der erste Teil der S-Kurve von der Definition der beiden Abschnitte mit dazwischen angeordneter Kurve abgedeckt ist. Für den zweiten Teil der S-Kurve gilt dann entsprechendes.

Ferner weisen die korrigierenden Klothoidensegmente den Anfangspunkt sowie den Endpunkt des ursprünglichen Klothoidensegments auf und von den korrigierenden Klothoidensegmente wird der durch die Kurve vorgegebene Winkel zwischen dem ersten Abschnitt und dem zweiten Abschnitt überstrichen. Dabei ist die aktuelle Position des Fahrzeugs ebenfalls Bestandteil des jeweiligen korrigierenden Klothoidensegments, d.h. das entsprechende Klothoidensegment für die aktuelle Position des Fahrzeugs enthält die aktuelle Position.

Weiter bevorzugt wird die Krümmung des nach dem Anfangspunkt bereits zurückgelegten Wegs ermittelt und mit der Krümmung des ursprünglichen Klothoidensegments verglichen. Wenn die Krümmung des bereits zurückgelegten Wegs kleiner ist als die Krümmung des ursprünglichen Klothoidensegments bis zu dem durch den zurückgelegten Weg definierten Winkel, so wird der Betrag der vorausliegenden Krümmung für die Korrektur durch das korrigierend Klothoidensegment für die aktuelle Position erhöht. Es wird also die Krümmung des ursprünglichen Klothoidensegments mit der tatsachlichen Krümmung verglichen. Stimmen die Krümmungen nicht überein, können Annahmen über den zukünftigen Verlauf getroffen werden.

Vorzugsweise wird die tatsächlich gefahrene Krümmung nach dem Anfangspunkt der ursprünglichen Klothoide anhand fahrdynamischer Größen, aus Messungen einer Umfeldsensorik und/oder aus Positionsbestimmungen des Fahrzeugs ermittelt. Als fahrdynamische Größe kommt beispielsweise die Gierrate in Frage, eine Umfeldsensorik führt beispielsweise eine Fahrstreifenerkennung durch, anhand der die Krümmung ermittelt werden kann und/oder eine Positionsbestimmung des Fahrzeugs erfolgt vorzugsweise satellitengestützt. Aus den so ermittelten tatsächlichen Daten lässt sich die Krümmung des bereits zurückgelegten Wegs ermitteln.

Weiter bevorzugt ermittelt eine vorausschauende Umfeldsensorik die Krümmung des vor der aktuellen Position des Fahrzeugs liegenden Fahrbahnabschnitts und die vorausliegende Krümmung und die Endposition des vorausliegenden Fahrbahnabschnitts werden zur Ermittlung eines korrigierenden Klothoidensegments berücksichtigt wird. Mit anderen Worten, anhand einer entsprechenden Umfeldsensorik wird beispielsweise für den vorausliegenden Fahrbahnabschnitt der Verlauf der Fahrbahnmarkierungen für die Sichtweite der Umfeldsensorik ermittelt. Aus dem Verlauf der Fahrbahnmarkierungen kann sowohl die Krümmung des Fahrbahnabschnitts als auch die Position auf dem vorausliegenden Fahrbahnabschnitt bestimmt werden, ab dem eine Änderung der Krümmung auftritt. Aus der vorausliegenden Krümmung und der Position, ab der sich die Krümmung ändert, kann ein korrigierendes Klothoidensegment prädiziert werden.

Vorzugsweise wird zur Ermittlung eines korrigierenden Klothoidensegments die Krümmung des zurückgelegten Wegs und die Position eines vorausfahrenden Fahrzeugs nach dem Anfangspunkt des ursprünglichen Klothoidensegments berücksichtigt. Auf diese Weise kann durch des Nachverfolgen eines vorausfahrenden Fahrzeugs die Korrektur der ursprünglichen Klothoide vorausschauend erfolgen.

Die erfindungsgemäße Vorrichtung zur Prädiktion des zukünftigen Fahrbahnverlaufs für ein auf einer Fahrbahn fahrendes Fahrzeug, wobei die Fahrbahn einen ersten Abschnitt, eine Kurve und einen zweiten Abschnitt aufweist, und die Kurve zwischen dem ersten und dem zweiten Abschnitt angeordnet ist, und wobei die Vorrichtung zur Durchführung des im Vorangegangenen erläuterten Verfahrens eingerichtet und ausgelegt ist, umfasst:
- eine digitalen Karteneinrichtung,
- eine Approximationseinrichtung, die aus den Kartendaten der Karteneinrichtung ein ursprüngliches Klothoidensegment mit Anfangs- und Endpunkten zur Approximation des Fahrbahnverlaufs bestimmt,
- eine Einrichtung zur Bestimmung der tatsächlichen Krümmung des bereits zurückgelegten Wegs des Fahrzeugs nach dem Anfangspunkt,
- eine Einrichtung zum Vergleich der tatsächlichen Krümmung und der prädizierten Krümmung des ursprüngliche Klothoidensegments, und
- eine Einrichtung zur Korrektur des ursprünglichen Klothoidensegments durch zeitlich nach dem ursprünglichen Klothoidensegment ermittelte korrigierende Klothoidensegmente anhand des Vergleichs, wobei die korrigierenden Klothoidensegmente den Anfangspunkt und den Endpunkt des ursprünglichen Klothoidensegments aufweisen, sowie den durch die Kurve vorgegebenen Winkel zwischen dem ersten Abschnitt und dem zweiten Abschnitt überstreichen.

Weiter bevorzugt weist die Vorrichtung eine Einrichtung zur Bestimmung der tatsächlichen Krümmung des zurückgelegten Wegs eines vorausfahrenden weiteren Fahrzeugs auf dem zukünftigen Weg des Fahrzeugs auf, wobei die tatsächliche Krümmung des zurückgelegten Wegs des vorausfahrenden Fahrzeugs zum Vergleich mit der prädizierten Krümmung des ursprüngliche Klothoidensegments verwendet wird.

Vorzugsweise weist die Vorrichtung eine Einrichtung zur Bestimmung der tatsächlichen Krümmung eines vorausliegenden Fahrbahnabschnitts vorgegebener Länge auf. Auch diese tatsächliche Krümmung des vorausliegenden Fahrbahnabschnitts kann zum Vergleich mit der prädizierten Krümmung des ursprünglichen Klothoidensegments verwendet werden. Eine derartige Einrichtung kann beispielsweise durch ein Kamerasystem realisiert sein, wie es beispielsweise zur Fahrspurerkennung eingesetzt wird.

Eine erfindungsgemäße Verwendung des im Vorangegangenen erläuterten Verfahrens zur Prädiktion des Streckenverlaufs einer Fahrbahn erfolgt in einem ACC-System und/oder einer Querführungsassistenz eines Fahrzeugs.

Eine bevorzugte Ausführungsform der Erfindung wird anhand der nachfolgenden Zeichnungen erläutert. Dabei zeigt
- Fig. 1: die Ausgangssituation eines Fahrzeugs weit vor einer Kurve,
- Fig. 2: die Situation der Fig. 1 mit aus Kartendaten prädiziertem Kurvenverlauf,
- Fig. 3: eine erste Korrektur für das Fahrzeug kurz vor der Kurve,
- Fig. 4: eine zweite Korrektur für das Fahrzeug in der Kurve,
- Fig. 5: die Situation der Fig. 1 mit einem weiteren, vorausfahrenden Fahrzeug, und
- Fig. 6: die Vorrichtung zur Prädiktion des zukünftigen Fahrbahnverlaufs.

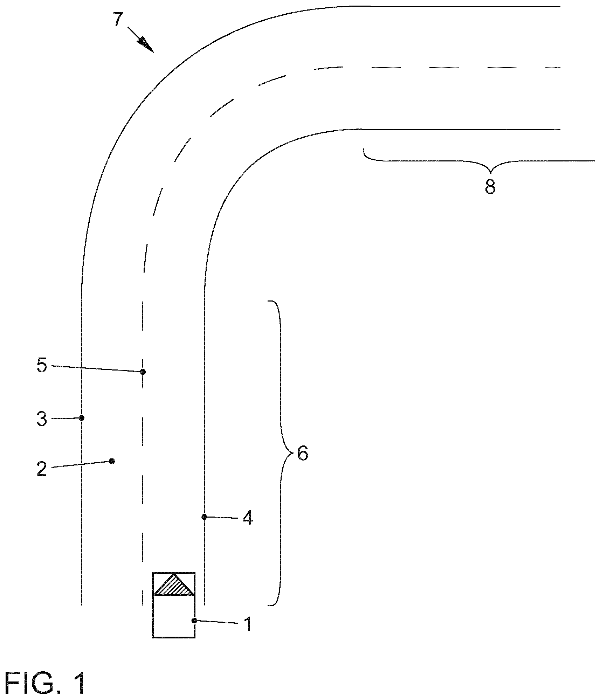

Fig. 1 zeigt ein Fahrzeug 1, welches sich auf einer zweispurigen Straße bzw. Fahrbahn 2 befindet, wobei die Fahrbahn 2 durch seitliche Markierungen 3 und 4 sowie eine Mittenmarkierung 5 in zwei Fahrstreifen unterteilt wird. Das Fahrzeug befindet sich auf einem ersten Abschnitt 6, der im Beispiel der Fig. 1 durch ein Geradenstück realisiert ist, und bewegt sich auf eine Kurve 7 zu, wobei sich das Fahrzeug 1 noch in einiger Entfernung von dem Kurvenscheitel, d.h. dem Kurvenapex, befindet. Nach der Kurve 7 geht die Fahrbahn 2 in einen zweiten Abschnitt 8 über, der in diesem Beispiel erneut durch ein Geradenstück gebildet wird.

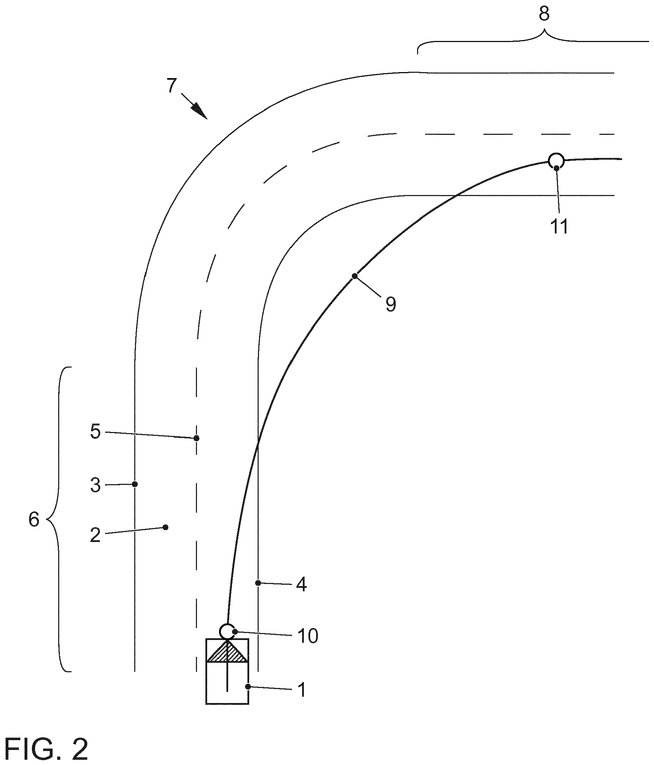

Fig. 2 zeigt die Situation der Fig. 1 mit einem Fahrzeug 1 auf der Fahrbahn 2 vor der Rechtskurve 7. Der reale und im digitalen Kartenmaterial enthaltene Verlauf der Fahrbahn 2 besteht aus einem ersten Abschnitt 6, einer scharfen Kurve 7 und einem an die Kurve 7 anschließenden zweiten Abschnitt 8. Durch die Approximation des Straßenverlaufs wird ein Klothoidensegment 9 gebildet, das bereits auf dem ersten Abschnitt 6 vor der Kurve 7 im Punkt 10 anfängt und auf dem zweiten Abschnitt 8 nach der Kurve 7 im Punkt 11 aufhört. Das zwischen den Punkten 10 und 11 liegende Klothoidensegment 9, welches die Approximation darstellt und im Folgenden als ursprüngliche Klothoide 9 bezeichnet wird, ist offensichtlich schwacher gekrümmt als die reale Kurve 7. Dies kann dazu führen, dass ein vorausschauendes ACC-Assistenzsystem aufgrund der geringeren Krümmung der als Prädiktion des Fahrbahnverlaufs dienenden ursprünglichen Klothoide 9 die Geschwindigkeit des Fahrzeugs 1 vor der Kurve 7 nicht angemessen reduziert. In der Folge kann auch ein Querführungssystem die Kurve 7 aufgrund beschränkter Eingriffsstärken gegebenenfalls nicht mehr selbständig durchfahren.

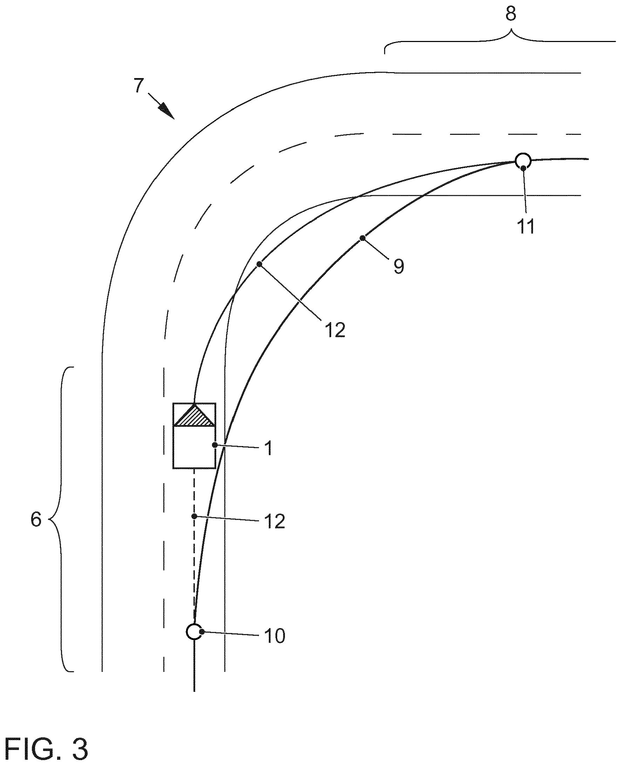

Fig. 3 zeigt den weiteren Verlauf der Verkehrssituation der Fig. 2. Das Fahrzeug 1 ist ausgehend vom Anfangspunkt 10 der ursprünglichen Klothoide 9 weiter in Richtung der Kurve 7 gefahren, befindet sich aber noch auf dem zu der Kurve 7 führenden ersten Abschnitt 6. Es ist offensichtlich, dass das Fahrzeug 1 der Prädiktion durch die ursprüngliche Klothoide 9 aufgrund des tatsächlichen Fahrbahnverlaufs nicht folgen kann. Als Folge dessen wird eine Online-Korrektur der approximierten Kartendaten, d.h. der ursprünglichen Klothoide 9, vorgenommen.

Dabei wird die Annahme getroffen, dass die Approximation der ursprünglichen Klothoide 9 des genauen Kartenmaterials formerhaltend ist. Mit anderen Worten, der überstrichene Winkel der Kurve 7 ist korrekt und die Anfangs- und Endpunkte 10, 11 der ursprünglichen Klothoide 9 stimmen mit der Karte überein. Ferner stellt der durchlaufene Weg der Klothoide 9 eine untere Grenze dar, d.h. der tatsächliche Fahrweg des Fahrzeugs 1 durch die Kurve 7 zwischen den Punkten 10 und 11 ist größer oder gleich dem ursprünglichen Klothoidenabschnitt 9.

Damit ergibt sich die Möglichkeit, die vorausliegende Krümmung während der Fahrt des Fahrzeugs 1 zu korrigieren. Hierzu wird die Krümmung aus dem ursprünglichen Klothoidensegment 9 mit der tatsachlichen Krümmung des zurückgelegten Wegs verglichen, was anhand von fahrdynamischen Größen, wie beispielsweise der Gierrate, von einer Fahrstreifenerkennung mittels einer Kamera bzw. Umfeldsensorik und/oder Positionsdaten per GPS erfolgen kann. Stimmen die Krümmungen nicht überein, können Annahmen über den zukünftigen Verlauf getroffen werden.

Im Szenario der Fig. 3 befindet sich das Fahrzeug 1 immer noch auf dem ersten Abschnitt 6 vor der Kurve 7. Die ursprüngliche Klothoide 9 weist allerdings für den Winkel der aktuellen Position des Fahrzeugs bereits eine anwachsende Krümmung auf. Da die tatsachlich gefahrene Krümmung kleiner als die prädizierte Krümmung ist, kann davon ausgegangen werden, dass der Betrag der vorausliegenden Krümmung nach oben korrigiert werden muss, so dass sich ein korrigierendes Klothoidensegment 12 mit Anfangs- und Endpunkten 10, 11 ergibt, wobei in Fig. 3 der vor dem Fahrzeug 1 liegende Teil des korrigierenden Klothoidensegments 12 durchgehend dargestellt ist, während der bereits zurückgelegte Teil des korrigierenden Klothoidensegments 12 gestrichelt dargestellt ist. Dabei ist Insbesondere die Krümmung im Apex-Punkt der Kurve, der die maximale Krümmung darstellt, von Bedeutung.

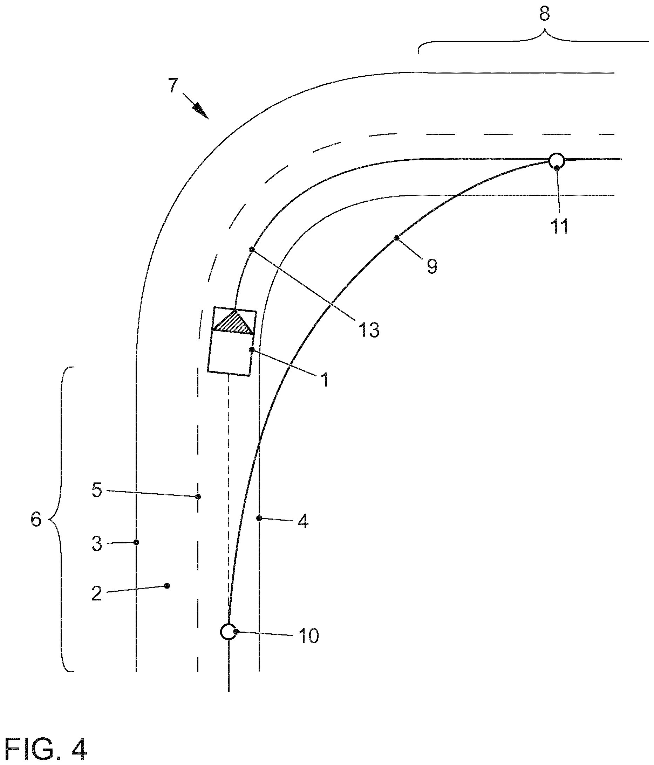

In Fig. 4 hat das Fahrzeug den Beginn der Kurve 7 erreicht und die tatsächliche Krümmung des bereits zurückgelegten Wegs zwischen dem Anfangspunkt 10 der ursprünglichen Klothoide 9 und der aktuellen Position des Fahrzeugs 1 war bis zu dieser Situation ebenfalls kleiner als das in Fig. 3 dargestellte erste korrigierende Klothoidensegment 12. Da von der Formerhaltung des Kartenmaterials auszugehen ist und der von der Kurve überstrichene Winkel, hier im Beispiel 90°, korrekt ist, ist der Betrag der vorausliegenden Krümmung daher weiter nach oben zu korrigieren, was zu der zweiten korrigierenden Klothoide 13 der Fig. 4 mit den Anfangs- und Endpunkten 10, 11 führt, wobei der vorausliegende Teil der zweiten korrigierten Klothoide 13 nunmehr die Kurve 7 durchläuft.

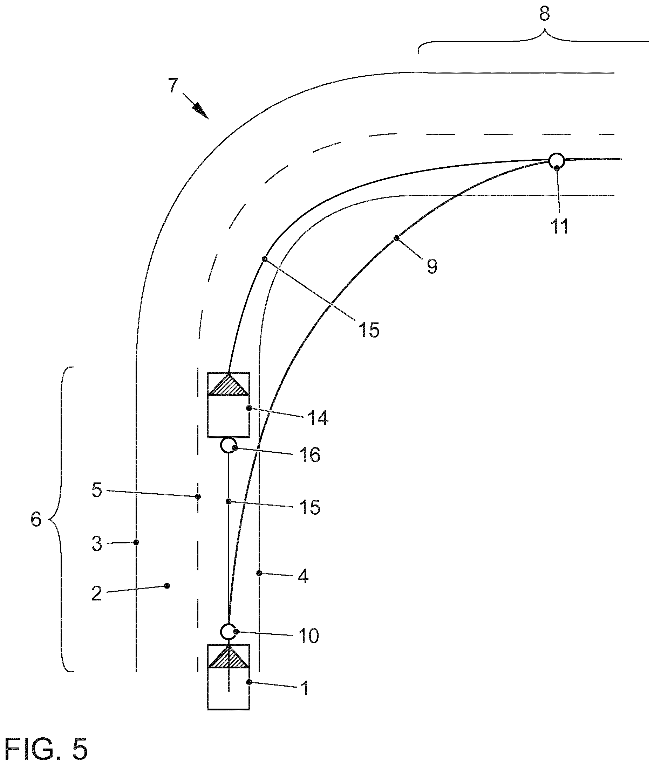

Fig. 5 zeigt eine Verkehrssituation ähnlich derjenigen der Fig. 2, in der das Egofahrzeug 1 sich am Anfangspunkt 10 der ursprünglichen Klothoide 9 befindet. Im Unterschied zu der ursprünglichen Situation der Fig. 2 befindet sich ein weiteres Fahrzeug 14 auf der Fahrbahn 2, welches in gleicher Richtung dem Ego-Fahrzeug 1 vorausfährt und sich daher bereits auf dem ersten Abschnitt 6 weiter vor der Kurve 7 befindet. Ist das Egofahrzeug 1 beispielsweise mit einer geeigneten Umfeldsensorik, wie beispielswiese einem Radar, ausgerüstet, welches üblicherweise Bestandteil eines ACC-Assistenten ist, so kann das Egofahrzeug 1 erkennen, dass der bereits zurückgelegte Weg des vorausfahrenden Fahrzeugs 14 nicht der Krümmung der approximativen ursprünglichen Klothoide 9 folgt. Damit ist es bereits in der Situation der Fig. 5 für das Ego-Fahrzeug 1 möglich eine Korrektur der ursprünglichen Klothoide 9 vorzunehmen und basierend auf dem bereits zurückgelegten Weg des vorausfahrenden Fahrzeugs 14, der gemessenen Position 16 des vorausfahrenden Fahrzeugs 14 und der Endposition 11 der ursprünglichen Klothoide 9 eine korrigierende Klothoide 15 zu bestimmen, die den Fahrbahnverlauf besser approximiert. Dabei folgt die aufgrund der Position des vorausfahrenden Fahrzeugs 14 bestimmte korrigierende Klothoide 15 noch nicht vollständig dem Straßenverlauf, was durch nachfolgende Messungen des vorausfahrenden Fahrzeugs 15 weiter korrigiert werden kann. Mit anderen Worten, durch die Nachverfolgung eines vorausfahrenden Fahrzeugs 15 kann die in Fig. 5 dargestellte, den Fahrbahnverlauf wiedergebende Klothoide 15 früher bestimmt werden.

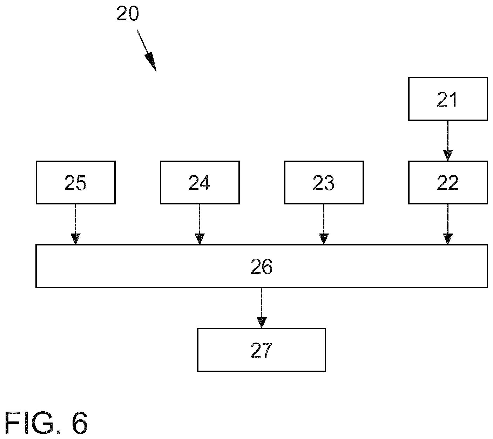

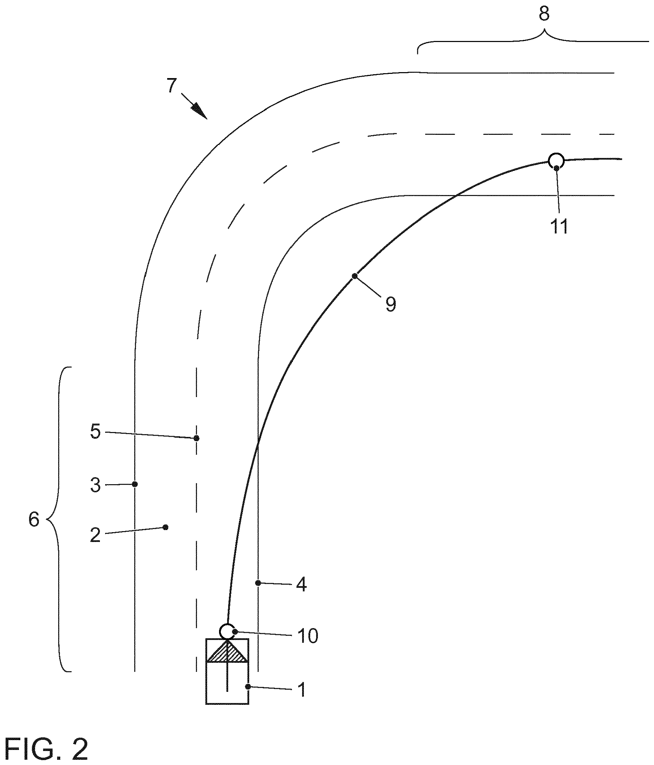

Fig. 6 zeigt in schematischer Darstellung die Vorrichtung zur Prädiktion des zukünftigen Fahrbahnverlaufs. Dabei umfasst die Vorrichtung 20 eine Karteneinrichtung 21, die Zugriff auf eine digitale Karte ermöglicht. Üblicherweise ist diese Karteneinrichtung 21 Bestandteil eines Navigationssystems und die Karte ist beispielsweise auf einer DVD gespeichert. Es kann sich jedoch auch um einen Onlinezugriff auf eine digitale Karte im Internet handeln. In einer Approximationseinrichtung 22 wird aus der digitalen Karte die ursprüngliche Klothoide 9 für den aktuellen Fahrbahnabschnitt ermittelt.

In einer weiteren Einrichtung 23 wird die Krümmung des zurückgelegten Fahrwegs des Egofahrzeugs 1 ermittelt. Parallel dazu wird optional in einer Einrichtung 24 die Krümmung des Fahrwegs eines vorausfahrenden Fahrzeugs ermittelt. Ferner wird ebenfalls optional in einer weiteren Einrichtung 25 die Krümmung des vor dem Egofahrzeug 1 vorausliegenden zukünftigen Fahrwegs ermittelt. Die ermittelten Krümmungen und die Krümmung der ursprünglichen Klothoide 9 werden dann einer Einrichtung 26 zum Vergleichen der ursprünglichen Krümmung mit den ermittelten Krümmungen zugeführt und eine Einrichtung 27 ermittelt eine Korrektur der ursprünglichen Klothoide 9 entlang des Fahrwegs des Egofahrzeugs 1 anhand des Vergleichs.

### Bezugszeichenliste

- 1: Fahrzeug - Egofahrzeug
- 2: Fahrbahn
- 3: Begrenzung links
- 4: Begrenzung rechts
- 5: Mittenlinie
- 6: erster Abschnitt
- 7: Kurve
- 8: zweiter Abschnitt
- 9: ursprüngliche Klothoide - prädizierter Streckenverlauf
- 10: Anfangspunkt
- 11: Endpunkt
- 12: erste Korrektur der ursprünglichen Klothoide
- 13: zweite Korrektur der ursprünglichen Klothoide
- 14: vorausfahrendes Fahrzeug
- 15: Korrektur der der ursprünglichen Klothoide aufgrund des vorausfahrenden Fahrzeugs
- 16: Aufsatzpunkt - Position des vorausfahrenden Fahrzeugs

- 20: Vorrichtung zur Fahrbahnverlaufsprädiktion
- 21: Karteneinrichtung
- 22: Approximationseinrichtung
- 23: Einrichtung zur Ermittlung der Krümmung des zurückgelegten Fahrwegs
- 24: Einrichtung zur Ermittlung der Krümmung des Fahrwegs eines vorausfahrenden Fahrzeugs
- 25: Einrichtung zur Ermittlung der Krümmung des zukünftigen Fahrwegs
- 26: Einrichtung zum Vergleichen der ursprünglichen Krümmung mit den ermittelten Krümmungen
- 27: Einrichtung zur Korrektur der ursprünglichen Klothoide

## Patentansprüche

1. Verfahren zur Prädiktion des zukünftigen Fahrbahnverlaufs für ein auf einer Fahrbahn (2) fahrendes Fahrzeug (1), wobei die Fahrbahn (2) einen ersten Abschnitt (6), eine Kurve (7) und einen zweiten Abschnitt (8) aufweist, und die Kurve (7) zwischen dem ersten und dem zweiten Abschnitt (6, 8) angeordnet ist, mit den Schritten:
- Bestimmen eines aus einem digitalen Kartenmaterial abgeleiteten approximierten Fahrbahnverlaufs mittels eines ursprünglichen Klothoidensegments (9), wobei das Klothoidensegment (9) einen Anfangspunkt (10) auf dem ersten Abschnitt (6) aufweist, einen Endpunkt (11) auf dem zweiten Abschnitt (8) aufweist, und das Klothoidensegment (9) den durch die Kurve (7) vorgegebenen Winkel zwischen dem ersten und dem zweiten Abschnitt (6, 8) überstreicht,
- Fortlaufendes Korrigieren des ursprünglichen Klothoidensegments (9) durch zeitlich nach dem Bestimmen des approximierten Fahrbahnverlaufs mittels des ursprünglichen Klothoidensegments ermittelte korrigierende Klothoidensegmente (12, 13), wobei jedes korrigierende Klothoidensegment (12, 13) die Krümmung des nach dem Anfangspunkt (10) tatsächlich zurückgelegten Fahrwegs des Fahrzeugs (1) berücksichtigt, **dadurch gekennzeichnet, dass** die korrigierenden Klothoidensegmente (12, 13) den Anfangspunkt (10) und den Endpunkt (11) des ursprünglichen Klothoidensegments (9) aufweisen, sowie den durch die Kurve (7) vorgegebenen Winkel zwischen dem ersten Abschnitt (6) und dem zweiten Abschnitt (8) überstreichen.

2. Verfahren nach Anspruch 1, **dadurch gekennzeichnet, dass** die Krümmung des nach dem Anfangspunkt (10) bereits zurückgelegten Wegs ermittelt und mit der Krümmung des ursprünglichen Klothoidensegments (9) verglichen wird und der Betrag der vorausliegenden Krümmung erhöht wird, wenn die Krümmung des bereits zurückgelegten Wegs kleiner ist als die Krümmung des ursprünglichen Klothoidensegments (9).

3. Verfahren nach einem der vorangegangenen Ansprüche, **dadurch gekennzeichnet, dass** die tatsächlich gefahrene Krümmung nach dem Anfangspunkt (10) der ursprünglichen Klothoide (9) anhand fahrdynamischer Größen, aus Messungen einer Umfeldsensorik und/oder aus Positionsbestimmungen des Fahrzeugs (1) ermittelt werden.

4. Verfahren nach Anspruch 3, **dadurch gekennzeichnet, dass** als fahrdynamische Größe die Gierrate bestimmt wird, eine Umfeldsensorik eine Fahrstreifenerkennung durchführt und eine Positionsbestimmung satellitengestützt erfolgt.

5. Verfahren nach einem der vorangegangenen Ansprüche, **dadurch gekennzeichnet, dass** eine vorausschauende Umfeldsensorik die Krümmung eines vor der aktuellen Position des Fahrzeugs (1)liegenden Fahrbahnabschnitts ermittelt und die vorausliegende Krümmung und die Endposition des vorausliegenden Fahrbahnabschnitts zur Ermittlung eines korrigierenden Klothoidensegments (12, 13) berücksichtigt werden.

6. Verfahren nach einem der vorangegangenen Ansprüche, **dadurch gekennzeichnet, dass** zur Ermittlung eines korrigierten Klothoidensegments (13) die Krümmung eines zurückgelegte Wegs eines vorausfahrenden Fahrzeugs (14) und dessen Position nach dem Anfangspunkt (10) des ursprünglichen Klothoidensegments (9) berücksichtigt werden.

7. Vorrichtung (20) zur Prädiktion des zukünftigen Fahrbahnverlaufs für ein auf einer Fahrbahn (2) fahrendes Fahrzeug (1), wobei die Fahrbahn (2) einen ersten Abschnitt (6), eine Kurve (7) und einen zweiten Abschnitt (8) aufweist, und die Kurve (7) zwischen dem ersten und dem zweiten Abschnitt (6, 8) angeordnet ist, und wobei die Vorrichtung zur Durchführung des Verfahrens nach einem der vorangegangenen Ansprüche eingerichtet und ausgelegt ist, mit
einer digitalen Karteneinrichtung (21),
einer Approximationseinrichtung (22), die aus den Kartendaten der Karteneinrichtung (21) ein ursprüngliches Klothoidensegment (9) mit Anfangs- und Endpunkten (10, 11) zur Approximation des Fahrbahnverlaufs bestimmt,
einer Einrichtung (23) zur Bestimmung der tatsächlichen Krümmung des bereits zurückgelegten Wegs des Fahrzeugs (1) nach dem Anfangspunkt (10), einer Einrichtung (26) zum Vergleich der tatsächlichen Krümmung und der prädizierten Krümmung des ursprüngliche Klothoidensegments (9), und
einer Einrichtung (27) zur Korrektur des ursprünglichen Klothoidensegments (9) durch zeitlich nach dem Bestimmen des approximierten Fahrbahnverlaufs mittels des ursprünglichen Klothoidensegments ermittelte korrigierende Klothoidensegmente (12,13) anhand des Vergleichs, **dadurch gekennzeichnet, dass** die korrigierenden Klothoidensegmente (12, 13) den Anfangspunkt (10) und den Endpunkt (11) des ursprünglichen Klothoidensegments (9) aufweisen, sowie den durch die Kurve (7) vorgegebenen Winkel zwischen dem ersten Abschnitt (6) und dem zweiten Abschnitt (8) überstreichen.

8. Vorrichtung (20) nach Anspruch 7, **dadurch gekennzeichnet, dass** die Vorrichtung (20) eine Einrichtung (24) zur Bestimmung der tatsächlichen Krümmung des zurückgelegten Wegs eines vorausfahrenden weiteren Fahrzeugs (14) auf dem zukünftigen Weg des Fahrzeugs (1) aufweist, wobei die tatsächliche Krümmung des zurückgelegten Wegs des vorausfahrenden Fahrzeugs (14) zum Vergleich mit der prädizierten Krümmung des ursprüngliche Klothoidensegments (9) verwendet wird.

9. Vorrichtung nach einem der Ansprüche 7 oder 8, **dadurch gekennzeichnet, dass** die Vorrichtung (20) eine Einrichtung (25) zur Bestimmung der Krümmung eines vorausliegenden Fahrbahnabschnitts vorgegebener Länge aufweist, wobei die tatsächliche Krümmung des vorausliegenden Fahrbahnabschnitts zum Vergleich mit der prädizierten Krümmung des ursprüngliche Klothoidensegments (9) verwendet wird.

10. Verwendung des Verfahrens nach einem der Ansprüche 1 bis 6 zur Prädiktion des Streckenverlaufs einer Fahrbahn in einem ACC-System und/oder einer Querführungsassistenz eines Fahrzeugs (1).

## Claims

1. Method for predicting the future road course for a vehicle (1) traveling on a road (2), the road (2) having a first section (6), a curve (7) and a second section (8), and the curve (7) being arranged between the first and the second section (6, 8), comprising the steps of:
- determining an approximated road course derived from a digital map material by means of an original clothoid segment (9), wherein the clothoid segment (9) has an initial point (10) on the first section (6), an end point (11) on the second section (8), and the clothoid segment (9) sweeps over the angle predetermined by the curve (7) between the first and the second section (6, 8),
- continuously correcting the original clothoid segment (9) by means of corrective clothoid segments (12, 13) determined in time after the determination of the approximated road course by means of the original clothoid segment, wherein each corrective clothoid segment (12, 13) takes into account the curvature of the path actually traveled by the vehicle (1) after the initial point (10), **characterized in that** the corrective clothoid segments (12, 13) have the initial point (10) and the end point (11) of the original clothoid segment (9) and sweep over the angle predetermined by the curve (7) between the first section (6) and the second section (8).

2. Method according to Claim 1, **characterized in that** the curvature of the path already traveled after the initial point (10) is determined and compared with the curvature of the original clothoid segment (9) and the magnitude of the curvature lying ahead is increased if the curvature of the path already traveled is less than the curvature of the original clothoid segment (9).

3. Method according to any one of the preceding claims, **characterized in that** the curvature actually traveled after the initial point (10) of the original clothoids (9) is determined on the basis of driving dynamics variables, from measurements of an environmental sensor system and/or from position determinations of the vehicle (1).

4. Method according to Claim 3, **characterized in that** the yaw rate is determined as the driving dynamics variable, that an environmental sensor system carries out a lane detection, and that a satellite-based position determination is carried out.

5. Method according to any one of the preceding claims, **characterized in that** a predictive environmental sensor system determines the curvature of a road section lying ahead of the current position of the vehicle (1) and that the curvature lying ahead and the end position of the road section lying ahead are taken into account in order to determine a corrective clothoid segment (12, 13).

6. Method according to any one of the preceding claims, **characterized in that** the curvature of a path traveled by a vehicle (14) traveling ahead and its position after the initial point (10) of the original clothoid segment (9) are taken into account in order to determine a corrected clothoid segment (13).

7. Device (20) for predicting the future road course for a vehicle (1) traveling on a road (2), the road (2) having a first section (6), a curve (7), and a second section (8), and the curve (7) being arranged between the first and the second section (6, 8), and the device for implementing the method according to any one of the preceding claims being configured and designed, with
a digital map device (21),
an approximation device (22) which from the map data of the map device (21) determines an original clothoid segment (9) with initial and end points (10, 11) in order to approximate the road course,
a device (23) for determining the actual curvature of the path already traveled by the vehicle (1) after the initial point (10),
a device (26) for comparing the actual curvature and the predicted curvature of the original clothoid segment (9), and
a device (27) for correcting with the aid of the comparison the original clothoid segment (9) by means of corrective clothoid segments (12, 13) determined in time after the determination of the approximated road course by means of the original clothoid segment, **characterized in that** the corrective clothoid segments (12, 13) have the initial point (10) and the end point (11) of the original clothoid segment (9) and sweep over the angle predetermined by the curve (7) between the first section (6) and the second section (8).

8. Device (20) according to Claim 7, **characterized in that** the device (20) comprises a device (24) for determining the actual curvature of the path traveled by a further vehicle (14) traveling ahead on the future path of the vehicle (1), the actual curvature of the path traveled by the vehicle (14) traveling ahead being used for comparison with the predicted curvature of the original clothoid segment (9).

9. Device according to any one of Claims 7 or 8, **characterized in that** the device (20) has a device (25) for determining the curvature of a road section of prespecified length lying ahead, wherein the actual curvature of the road section lying ahead is used for comparison with the predicted curvature of the original clothoid segment (9).

10. Use of the method according to any one of Claims 1 to 6 for predicting the course of a road in an ACC system and/or a lateral guidance assistance of a vehicle (1).

## Revendications

1. Procédé pour la prédiction du tracé de voie de roulement à venir pour un véhicule (1) roulant sur une voie de roulement (2), la voie de roulement (2) présentant une première section (6), une courbe (7) et une deuxième section (8) et la courbe (7) étant disposée entre la première et la deuxième section (6, 8), comprenant les étapes de :
- détermination d'un tracé de voie de roulement approximé dérivé de matériel cartographique numérique au moyen d'un segment clothoïde (9) initial, le segment clothoïde (9) présentant un point initial (10) sur la première section (6), présentant un point final (11) sur la deuxième section (8) et le segment clothoïde (9) balayant l'angle défini par la courbe (7) entre la première et la deuxième section (6, 8),
- correction continue du segment clothoïde (9) initial par des segments clothoïdes correcteurs (12, 13) déterminés temporellement après la détermination du tracé de voie de roulement approximé au moyen du segment clothoïde initial, chaque segment clothoïde correcteur (12, 13) tenant compte de la courbure de la trajectoire réellement parcourue par le véhicule (1) au-delà du point initial (10), **caractérisé en ce que** les segments clothoïdes correcteurs (12, 13) présentent le point initial (10) et le point final (11) du segment clothoïde (9) initial et balaient l'angle défini par la courbe (7) entre la première section (6) et la deuxième section (8).

2. Procédé selon la revendication 1, **caractérisé en ce que** la courbure de la trajectoire déjà parcourue au-delà du point initial (10) est déterminée et comparée à la courbure du segment clothoïde (9) initial et la valeur de la courbure à venir est augmentée lorsque la courbure du trajet déjà parcouru est inférieure à la courbure du segment clothoïde (9) initial.

3. Procédé selon l'une quelconque des revendications précédentes, **caractérisé en ce que** la courbure réellement parcourue au-delà du point initial (10) de la clothoïde (9) initiale est déterminée au moyen de grandeurs dynamiques de conduite, provenant de mesures d'un système de capteurs d'environnement et/ou de déterminations de position du véhicule (1).

4. Procédé selon la revendication 3, **caractérisé en ce que** le taux de lacet est déterminé en tant que grandeur dynamique de conduite, un système de capteurs d'environnement effectue une détection de bande de circulation et une détermination de position est réalisée par satellite.

5. Procédé selon l'une quelconque des revendications précédentes, **caractérisé en ce qu'un** système de capteurs d'environnement prédictifs détermine la courbure d'une section de voie de roulement située devant la position actuelle du véhicule (1) et la courbure à venir et la position finale de la section de voie de roulement à venir sont prises en compte pour la détermination d'un segment clothoïde correcteur (12, 13).

6. Procédé selon l'une quelconque des revendications précédentes, **caractérisé en ce que,** pour la détermination d'un segment clothoïde corrigé (13), la courbure d'un trajet parcouru d'un véhicule (14) qui précède et sa position au-delà du point initial (10) du segment clothoïde (9) initial sont prises en compte.

7. Dispositif (20) pour la prédiction du tracé de voie de roulement à venir pour un véhicule (1) roulant sur une voie de roulement (2), la voie de roulement (2) présentant une première section (6), une courbe (7) et une deuxième section (8) et la courbe (7) étant disposée entre la première et la deuxième section (6, 8) et le dispositif étant conçu et agencé pour la mise en oeuvre du procédé selon l'une quelconque des revendications précédentes, comprenant
un système cartographique numérique (21),
un dispositif d'approximation (22) qui détermine, à partir des données cartographiques du système cartographique (21), un segment clothoïde (9) initial comprenant des points initial et final (10, 11) pour l'approximation du tracé de la voie de roulement,
un dispositif (23) pour la détermination de la courbure réelle du trajet déjà parcouru du véhicule (1) au-delà du point initial (10),
un dispositif (26) pour la comparaison de la courbure réelle et de la courbure prédite du segment clothoïde (9) initial et
un dispositif (27) pour la correction du segment clothoïde (9) initial par des segments clothoïdes correcteurs (12, 13) déterminés temporellement après la détermination du tracé de voie de roulement approximé au moyen du segment clothoïde initial, au moyen de la comparaison, **caractérisé en ce que** les segments clothoïdes correcteurs (12, 13) présentent le point initial (10) et le point final (11) du segment clothoïde (9) initial et balaient l'angle défini par la courbe (7) entre la première section (6) et la deuxième section (8).

8. Dispositif (20) selon la revendication 7, **caractérisé en ce que** le dispositif (20) présente un système (24) pour la détermination de la courbure réelle du trajet parcouru d'un autre véhicule (14) qui précède sur le trajet à venir du véhicule (1), la courbure réelle du trajet parcouru du véhicule (14) qui précède étant utilisée pour la comparaison avec la courbure prédite du segment clothoïde (9) initial.

9. Dispositif selon l'une quelconque des revendications 7 ou 8, **caractérisé en ce que** le dispositif (20) présente un système (25) pour la détermination de la courbure d'une section de voie de roulement à venir d'une longueur prédéfinie, la courbure réelle de la section de voie de roulement à venir étant utilisée pour la comparaison avec la courbure prédite du segment clothoïde (9) initial.

10. Utilisation du procédé selon l'une quelconque des revendications 1 à 6 pour la prédiction du tracé du parcours d'une voie de roulement dans un système ACC et/ou pour une assistance au guidage transversal d'un véhicule (1).
